(19) Europäisches Patentamt
European Patent Office
Office européen des brevets

(11) Veröffentlichungsnummer : **0 332 016 B1**

(12) # EUROPÄISCHE PATENTSCHRIFT

(45) Veröffentlichungstag der Patentschrift :
**03.07.91 Patentblatt 91/27**

(51) Int. Cl.$^5$ : **C09J 11/08**

(21) Anmeldenummer : **89103449.8**

(22) Anmeldetag : **28.02.89**

(54) **Verlegung von Fliesen mittels eines Fliesenklebstoffs.**

(30) Priorität : **05.03.88 DE 3807235**

(43) Veröffentlichungstag der Anmeldung :
**13.09.89 Patentblatt 89/37**

(45) Bekanntmachung des Hinweises auf die Patenterteilung :
**03.07.91 Patentblatt 91/27**

(84) Benannte Vertragsstaaten :
**AT BE CH DE ES FR GB IT LI NL SE**

(56) Entgegenhaltungen :
**EP-A- 0 061 822**
**EP-A- 0 237 960**

(73) Patentinhaber : **BASF Aktiengesellschaft**
**Carl-Bosch-Strasse 38**
**W-6700 Ludwigshafen (DE)**

(72) Erfinder : **Aydin, Oral, Dr.**
**Sophienstrasse 14**
**W-6800 Mannheim 1 (DE)**
Erfinder : **Fickeisen, Peter**
**Hauptstrasse 45**
**W-6716 Dirmstein (DE)**
Erfinder : **Hummerich, Rainer, Dr.**
**Grosser Riedweg 17**
**W-6520 Worms 27 (DE)**
Erfinder : **Goertz, Hans-Helmut, Dr.**
**Am Wurmberg 11**
**W-6713 Freinsheim (DE)**

**EP 0 332 016 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verlegung von Fliesen mittels eines Fliesenklebers mit verbesserten Verarbeitungseigenschaften.

Es ist (z.B. aus GB 20 70 635 und DE 21 48 457) bekannt, daß Polymerdispersionen, die ausgehend von verschiedenen Monomerkombinationen wie Vinyl-acetat und Acryl- und Methacrylsäureestern mit Styrol, Butadien usw. aufgebaut sind, als Basismaterialien für Fliesenklebstoffe eingesetzt werden können. Solche Klebstofformulierungen haben aber den Nachteil, daß sie nicht wasserfest und daher für einige Anwendungen, vor allem in Naßräumen, nicht geeignet sind. Da aber die Klebstoffe für Fliesenleger auf Dispersionsbasis einfacher handhabbar sind als die wasserfesten Fliesenkleber auf Zementbasis, war man bestrebt, die Dispersionskleber wasserfest zu machen.

Man hat versucht, wie in GB 20 70 635 beschrieben, Polymerdispersionen mit Carboxylfunktionen über Zinktetramminkomplexe wasserfest zu machen.

Gemäß DE 21 48 457 wird versucht, Polymerdispersionen über die eingebauten Silanolgruppen wasserfest auszurüsten.

Neben den Anforderungen an die Waserfestigkeit der Klebstoffe für keramische Bekleidungen im Dünnbettverfahren (nach DIN 18 156 ; Teile 1, 2, 3) ist es für die Praxis wichtig, eine gute Verarbeitbarkeit der Klebstoffe und ein ausreichendes Abrutschverhalten, d.h. eine leichte Aufbringung des Klebstoffs an die Wand ohne großen Kraftaufwand bei gleichzeitig möglichst geringem Abrutschen der frisch verklebten Fliesen zu gewährleisten.

Um aus den an sich sehr dünnflüssigen Dispersionen pastenförmige Klebstoffe für die Verarbeitung herzustellen, werden zu den Dispersionen neben den üblichen Zusätzen (Füllstoffe, Filmbildehilfsmittel, Dispergiermittel, Weichmacher, Harze usw.), Verdickungsmittel auf organischer und anorganischer Basis zugesetzt. Solche Verdicker sind z.B. in GB 20 70 635 sowie in 21 48 457 genannt, wie Cellulosederivate, Alginate, Stärke, Stärkederivate, Polyacrylsäure, Salze, Kieselsäure, Bentonite.

Durch diese Zusätze wird zwar eine ausreichende Verarbeitbarkeit erhalten, aber oft die Wasserfestigkeit so verschlechtert, daß die Fliesen nach Wasserlagerung abfallen. Abgesehen davon wird bei den bisher verwendeten Verdickern zwar die Vorschrift für das Abrutschverhalten nach DIN 18 156 Teil 2, 5.2.5 mit leichten Fliesen (ca. 210 g-Steingut) erfüllt, aber bei der Verarbeitung schwerer Fliesen (z.B. 950 g-Fliesen) ist unter Beibehaltung der leichten Verarbeitbarkeit die Abrutschfestigkeit nicht mehr gegeben.

Aufgabe der vorliegenden Erfindung ist nun, die üblicherweise für die Herstellung von Fliesenklebern eingesetzten Dispersionen rheologisch so zu modifizieren, daß die daraus hergestellten Fliesenkleber neben einer guten, leichten Verarbeitbarkeit auch bei der Verklebung schwerer Fliesen ein gutes Abrutschverhalten aufweisen. Neben den guten Verarbeitungseigenschaften sollten die Zusätze für die rheologische Einstellung der Pasten die Wasserfestigkeit der eingesetzten Dispersion nicht verschlechtern, wenn möglich verbessern.

Es wurde gefunden, daß Polymerdispersionen für Fliesenkleber-Formulierungen sich durch Zusatz von Verbindungen der allgemeinen Formel I

$$R\left[-A_x-(CH_2-\overset{\displaystyle R^1}{\overset{|}{C}}H-O)_y-H\right]_n \qquad I,$$

wobei

R = über Sauerstoff gebundener Rest eines 2 bis 6-wertigen Alkohols mit 2 bis 10 C-Atomen,

$R^1$ = Alkyl-, Alkoxymethyl- oder Alkenyloxymethyl-Rest oder eine Mischung dieser Reste, mit jeweils 16 bis 30 C-Atomen im Alkyl-, Alkoxy- bzw. Alkenyloxy-Rest,

A = $-CH_2CH_2-O-$ (= EO) allein oder in Mischung mit

$-CH_2-CH-O$ (= PO)
$\quad\quad\;|$
$\quad\quad CH_3$

$-CH_2-CH-O-$
$\quad\quad\;|$
$\quad\quad C_2H_5$

$-CH-CH-O-$
$\;|\quad\;\;|$ oder
$CH_3\;CH_3$

$-CH_2CH_2CH_2CH_2-O-$.

wobei A zu mindestens 50, vorzugsweise mind. 70, Mol.-% $-CH_2CH_2O-$ bedeutet,

x = 12 bis 500

y = ein Durchschnittswert (gemittelt über zahlreiche Moleküle) von 0,3 bis 5, vorzugsweise 0,5 bis 2,

n = eine ganze Zahl von 2 bis 6,

als Verdicker so modifizieren lassen, daß deren Verarbeitung als Fliesenkleber vorteilhaft beeinflußt wird, wobei die Wasserfestigkeiten der Klebstoffe nach DIN 18 156 Teil 2 (für hydraulisch erhärtende Systeme) erreicht werden.

Derartige Verbindungen wurden bereits als Verdicker für hydraulische Flüssigkeiten auf wäßriger Basis (US 4 411 819, 4 649 224, 4 665 239, WO 84/00361), sowie für wäßrige Quenchflüssigkeiten (US 4 381 205) zum Abschrecken heißer Metalle vorgeschlagen. Ihre hervorragende Eignung als Verdicker für Fliesenkleber war dadurch jedoch nicht nahegelegt.

Die erfindungsgemäß eingesetzten Verdicker sind Polyetherpolyole, die aus einem linearen oder verzweigten Niedrigalkylenoxid-Homo- oder -Copolymeren bestehen, das endständig mit 1,2-Alkylenoxiden mit 18 bis 32 Kohlenstoffatomen oder Alkyl- bzw. Alkenylglycidylethern mit 16 bis 30 Kohlenstoffatomen in der Alkyl- bzw. Alkenylkette umgesetzt ist. Das mittlere Molekulargewicht liegt im Bereich von 1000 bis 75000.

Solche Polyetherpolyole werden erhalten, indem man, wie in EP 61 822 und EP 116 564 beschrieben, einen mehrwertigen Alkohol (mit etwa 2 bis 6 Hydroxylgruppen), enthaltend etwa 2 bis 10 Kohlenstoffatome, mit Ethylenoxid alleine oder mit Ethylenoxid und einem oder mehreren Alkylenoxiden mit 3 oder 4 Kohlenstoffatomen umsetzt (wobei im letzteren Fall die Umsetzung im Gemisch erfolgt, wenn ein statistisches Copolymeres gewünscht ist, und sukzessiv erfolgt, wenn ein Blockcopolymeres gewünscht ist) und anschließend diese Zwischenstufe mit mindestens 0,3 Äquivalent (pro Hydroxylgruppe) Alkylenoxid mit 18 bis 32 Kohlenstoffatomen und endständiger Epoxidgruppe oder mit mindestens 0,3 Äquivalent Alkyl- oder Alkenylglycidylether mit 16 bis 30 Kohlenstoffatomen im Alkyl bzw. Alkenylrest umsetzt. Die Herstellung kann auch, wie in US 4 398 045 beschrieben, durch Umsetzung eines bereits vorliegenden Polyalkylenoxidhomo- oder copolymeren, das aus $C_2$- bzw. $C_2$ und $C_3/C_4$-Epoxiden aufgebaut ist, mit den o.g. längerkettigen Alkylenoxiden bzw. Glycidylethern erhalten werden.

Mit 2 bis 6-wertigen Alkoholen sind solche gemeint, die 2 bis 6 Hydroxylgruppen besitzen. Es handelt sich im einzelnen um Alkanpolyole, Alkenpolyole, Alkinpolyole oder Oligooxyalkylenglykole, jeweils mit 2 bis 10, vorzugsweise 2 bis 6, Kohlenstoffatomen.

Beispiele für geeignete Alkanpolyole sind Ethylenglykol, 1,2- und 1,3-Propylenglykol, Neopentylglykol, 1,2-Butandiol, 1,3-Butandiol, 1,4-Butandiol, Trimethylolpropan, Glycerin, Pentaerythrit, 2,3,4,5-Hexantetrol, Sorbit, Glucose.

Beispiele für Alkenpolyole sind 2-Buten-1,4-diol, 2-Hexen-1,4,6-triol, 1,5-Hexadien-3,4-diol, 3-Hepten-1,2,6,7-tetrol.

Beispiele für Alkinpolyole sind 2-Butin-1,4-diol, 2-Hexin-1,4,6-triol, 4-Octin-1,2,7,8-tetrol.

Beispiele für Oligooxyalkylenglykole sind Diethylenglykol, Triethylenglykol, Tetraethylenglykol, Dipropylenglykol.

Das Grundgerüst des Polyetherpolyols kann entweder nur aus Oxyethyleneinheiten aufgebaut sein oder daneben auch Oxyalkyleneinheiten mit 3 bis 4 Kohlenstoffatomen in einer Menge bis zu 50, vorzugsweise 30 Mol.-%, enthalten. Entsprechende Alkylenoxide sind insbesondere Propylenoxid, aber auch 1,2-Butylenoxid, 2,3-Butylenoxid, ferner auch Tetrahydrofuran. Die entsprechenden Copolymeren können statistische oder Blockcopolymere sein. Unter den Copolymeren besonders bevorzugt sind solche, die Ethylenoxid und Propylenoxid im Gewichtsverhältnis 70 : 30 bis 95 : 5 enthalten.

Die Herstellung der am Kettenende eingebauten längerkettigen Epoxide bzw. Glycidylether mit 18 bis 32

bzw. 19 bis 33 Kohlenstoffatomen erfolgt in üblicher Weise durch Olefinoxidation bzw. durch Umsetzung von Fettalkoholen mit Epichlorhydrin.

Die Menge an längerkettigem 1,2-Alkylenoxid bzw. Glycidylether liegt im allgemeinen zwischen 0,5 und 75 Gew.-%, bezogen auf das Gesamtmolekül. Das durchschnittliche molare Verhältnis von längerkettigem Epoxid bzw. Glycidylether zu jeder einzelnen Hydroxygruppe des mehrfunktionellen Alkohols soll im Bereich von 0,3 bis 5, vorzugsweise 0,5 bis 2, liegen.

Beispiele für langkettige 1,2-Epoxide sind 1,2-Epoxyoctadecan, 1,2-Epoxyeicosan, 1,2-Epoxydocosan, 1,2-Epoxytetracosan, 1,2-Epoxyhexacosan, 1,2-Epoxyoctacosan wie auch Mischungen solcher Epoxide, die käuflich erhältlich sind.

Beispiele für Alkylglycidylether sind Octadecyl-, Eicosyl-, Tetracosyl-, Ceryl-, 2-Hexyldodecyl- und 2-Octyldodecylglycidylether.

Beispiele für Alkenylglycidylether sind Oleylglycidylether oder Phytylglycidylether.

Als Verdickungsmittel werden Polyetherpolyole vom Molgewicht 1000 bis 75 000 bevorzugt, die man durch Umsetzung eines bi- oder trifunktionellen Alkohols mit Ethylenoxid, ggf. im Gemisch mit bis zu 30 Gew.-% Propylenoxid, und anschließende weitere Umsetzung mit mindestens einem 1,2 Alkylenoxid mit 18 bis 32 Kohlenstoffatomen oder mindestens einem Alkyl- oder Alkenylglycidylether mit 16 bis 30 Kohlenstoffatomen in der Alkyl- bzw. Alkenylgruppe in einer Menge von 2 bis 5 Mol pro Mol bi- oder trifunktioneller Alkohol erhält.

Die Polymerisate der Polymer-Dispersionen können sich z.B. von Acryl-und/oder Methacrylsäureestern geradkettiger oder verzweigter Alkanole, die meist 1 bis 10, insbesondere 4 bis 8 C-Atome aufweisen, von vinyl-aromatischen Monomeren, wie Styrol ; von Vinylestern 2 bis 10, insbesondere 2 bis 4 C-Atome enthaltender Carbonsäuren, vorzugsweise Vinylacetat und Vinylpropionat, Vinyl- und/oder Vinylidenhalogeniden und/oder 1,3-Diolefinen, vorzugsweise Butadien, ableiten. Von besonderem Interesse sind Polymer-Dispersionen mit Klebstoffeigenschaften. Besonders geeignet sind daher Polymer-Dispersionen, deren Polymerisate sich aus Acrylsäureestern, insbesondere aus n-Butyl-, Isobutyl- und 2-Ethylhexylacrylat, Vinylestern, besonders Vinylacetat, Vinylpropionat und Vinyllaurat ggf. untereinander gemischt und/oder im Gemisch mit z.B. Ethylen, Styrol und Butadien aufbauen. Die Konzentration der Polymer-Dispersionen liegt im allgemeinen im Bereich von 35 bis 70, insbesondere von 40 bis 60 Gew.-% Polymerisat, bezogen auf die Polymer-Dispersion.

Die erfindungsgemäßen Verdicker können im Gegensatz zu vielen üblichen im gesamten pH-Bereich von 1 bis 10 eingesetzt werden, da ihr Effekt sehr wenig vom pH-Wert abhängt. Sie können aus Wasser oder wäßrigen Mischungen von mit Wasser mischbaren Lösungsmitteln wie Alkoholen, Glykolen und aus üblichen Lösungsmitteln, in denen die Verdicker löslich sind, wie Estern, Ketonen, Kohlenwasserstoffen, Weichmachern, flüssigen Harzen oder aus flüssigen nichtionischen Tensiden wie Fettalkoholalkoxylaten, Alkylphenolalkoxylaten, Fettsäurealkoxylaten verarbeitet werden. Wegen der sehr starken Verdickungseffekte ist es vorteilhaft, mit etwa 10 %igen Verdickerlösungen zu arbeiten.

Der Anteil des Verdickers der Formel I (100% Festgehalt) an der gesamten Formulierung liegt bei 0,01 und 5 Gew.-%, vorzugsweise zwischen 0,05 und 2,0 Gew.-%. Bei Kombination mit anderen Verdickungsmitteln, soweit diese die Wasserfestigkeit nicht stark negativ beeinflussen, können diese Mengen deutlich unterschritten werden. Die Verdicker werden vorzugsweise als Lösung in Wasser oder einer Kombination aus Wasser und wenigstens teilweise wassermischbaren organiscchen Lösemitteln eingesetzt.

Die Herstellung der Fliesenkleber erfolgt nach den allgemein bekannten Verfahren, wobei durch gründliches Mischen der einzelnen Bestandteile homogene Massen erzielt werden. Bei der Herstellung der Mischungen hat es sich als vorteilhaft herausgestellt, daß Wasser und die erfindungsgemäßen Verdicker vorgemischt und anschließend die Dispersion sowie Füllstoffe und ggf. andere Additive zugegeben werden.

Beispiele :

Es wurden 3 verschiedene auf dem Markt käufliche Polymerdispersionen verwendet :

| | |
|---|---|
| Dispersion A | eine 50 %ige wäßrige Dispersion eines Acrylsäureester/Styrol-Copolymeren |
| Dispersion B | eine 50 %ige wäßrige Dispersion eines Copolymerisats aus Styrol und Acrylsäureester, für Fliesenkleber empfohlen |
| Dispersion C | eine 50 %ige Dispersion eines Styrol/Acrylsäureester-Copolymerisats mit Carboxylgruppen und Zinktetrammin-Komplex |
| Zusätze : | BDGA - Butyldiglykolacetat |
| | Quarzmehl W1) von Quarzwerke GmbH |
| | Quarzmehl W12) 5020 Frechen |
| | Alkylphenol, sechsfach oxethyliert |
| | Polyacrylsäure-Ammonium-Salz, |

12 %ig in Wasser

Vergleichs-Verdicker: Culminal® MHPC 20 000 PR (Henkel)

1: R = 1,1,1-Trimethylolpropan-Rest, über Sauerstoff gebunden
$R^1$ = H und $CH_3$ im Molverhältnis 87 : 13
$R^2$ = $C_{22-26}$-Alkyl
x = 120
y = 1
n = 3
{Zubereitung: 50 %ig in BDGA}

2: R = 1,1,1-Trimethylolpropan-Rest, über Sauerstoff gebunden
$R^1$ = H und $CH_3$ im Molverhältnis 87 : 13
$R^2$ = $C_{22}$-$C_{26}$-Alkyl
x = 120
y = 1
n = 3
{Zubereitung: 50 %ig in BDGA}

3: R = 1,1,1-Trimethylolpropan-Rest, über Sauerstoff gebunden
$R^1$ = H und $CH_3$ im Molverhältnis 87 : 13
$R^2$ = $C_{16}$-Alkyl
x = 120
y = 1
n = 3
{Zubereitung: 50 %ig in BDGA}

4: R = 1,1,1-Trimethylolpropan-Rest, über Sauerstoff gebunden
$R^1$ = H und $CH_3$ im Molverhältnis 87 : 13
$R^2$ = $C_{22-26}$-Alkyl
x = 120
y = 0,85
n = 3
{Zubereitung: 50 %ig in BDGA}

5: R = 1,1,1-Trimethylolpropan-Rest, über Sauerstoff gebunden
$R^1$ = H und $CH_3$ im Molverhältnis 87 : 13
$R^2$ = $C_{22-26}$-Alkyl
x = 120
y = 1,5
n = 3
{Zubereitung: 50 %ig in BDGA}

6: R = Ethylenglykol-Rest, über Sauerstoff gebunden
$R^1$ = H
$R^2$ = C16-Alkyl
x = 150
y = 4
n = 2
Zubereitung: Mischung Verdicker Nr. 6 + Lutensol AP6 im Gewichtsverhältnis 3 : 1, das Ganze 75 %ig in Wasser.

Tabelle 1

Fliesenkleber: Mischungen aus (die Zahlen geben die Mengen in Gewichtsteilen an)

| Beispiel Nr. | | 1 | 2 | 3 | 4 | 5 | 6 | 7 | 8 | 9 | 10 | 11 | 12 | 13 |
|---|---|---|---|---|---|---|---|---|---|---|---|---|---|---|
| Wasser | | 15 | 15 | 15 | 15 | 15 | 15 | 15 | 15 | 15 | 15 | 15 | 15 | 15 |
| Culminal MHPC 20000 PR | | 1 | | | 1 | | | 1 | | | | | | |
| Latekoll D-Lösung | | | | 5 | | | | | | | | | | |
| Verdicker Nr. | 1 | - | - | 2,5 | - | 2,5 | - | - | - | - | - | 2,5 | - | - |
| | 2 | - | - | - | - | - | 2,5 | - | - | - | - | - | 2,5 | - |
| | 3 | - | - | - | - | - | - | - | 2,5 | - | - | - | - | - |
| | 4 | - | - | - | - | - | - | - | - | 2,5 | - | - | - | - |
| | 5 | - | - | - | - | - | - | - | - | - | 2,5 | - | - | - |
| | 6 | - | - | - | - | - | - | - | - | - | - | - | - | 3,0 |
| Butyldiglykolacetat | | 1,25 | 1,25 | | 1,25 | | | 1,25 | | | | | | |
| Dispersion | A | 25 | 25 | 25 | | | | | | | | | | |
| | B | | | | 25 | 25 | 25 | | | | | | | |
| | C | | | | | | | 25 | 25 | 25 | 25 | 25 | 25 | 25 |
| Quarzmehl W1 | | 33 | 33 | 33 | 33 | 33 | 33 | 33 | 33 | 33 | 33 | 33 | 33 | 33 |
| Quarzmehl W12 | | 33 | 33 | 33 | 33 | 33 | 33 | 33 | 33 | 33 | 33 | 33 | 33 | 33 |

Die in Tabelle 1 beschriebenen Klebstoffe wurden nach DIN 18 156 geprüft.

a) Verarbeitbarkeit :

Die Verarbeitbarkeit wurde bei der Aufbringung des Klebstoffes an eine senkrechte Wand je nach Kraftaufwand bei dem Auskämmen des Klebstoffes (8 × 8 × 8 mm Kammspachtel) benotet.

1. sehr gut
2. gut
3. befriedigend
4. ausreichend
5. schlecht (schwer zu verarbeiten)

b) Wandhaftung - Abrutschen

Die Klebstoffe wurden unter erschwerten Bedingungen (gegenüber DIN 18 156 Teil 2, 5.2.5) geprüft. Das Abrutschverhalten wurde mit Steingutfliesen 20 × 20 cm (ca. 960 g) an einer senkrechten Wand anstatt mit 15 × 15 cm (ca. 210 g) gemäß der DIN-Vorschrift bei sofortigem Anlegen der Fliesen ermittelt.

c) Die Haftzugfestigkeiten wurden mit einem Herion-Gerät nach DIN 18 156, Teil 2, ermittelt.

Haftzugfestigkeiten :

1. 7 Tage trocken : 7 d
2. 7 Tage trocken, 7 Tage Wasserlagerung : 7 d, 7 W
3. 7 Tage trocken, 21 Tage Wasserlagerung : 7 d, 21 W

Die Ergebnisse sind in Tabelle 2 zusammengestellt.

Tabelle 2

Prüfung der Klebstoffe nach DIN 18 156

| Beispiel Nr. | 1* | 2 | 3 | 4* | 5 | 6 | 7* | 8 | 9 | 10 | 11 | 12 | 13 |
|---|---|---|---|---|---|---|---|---|---|---|---|---|---|
| Verarbeitbarkeit | 1-2 | 1-2 | 1-2 | 2 | 2 | 2 | 2 | 2-3 | 2 | 1 | 2 | 2 | 2 |
| Wandhaftung, Abrutschverhalten | g.abr. | gut | gut | g.abr. | gut | 1 mm | 2 mm | 10 mm | 2 mm | **g.abr. | gut | 2 mm | 2 mm |
| Haftzugfestigkeiten [N/mm] | | | | | | | | | | | | | |
| nach 7 d | 1,5 | 1,5 | 0,8 | 1,5 | 0,6 | 0,9 | 1,5 | 1,5 | 1,5 | 1,3 | 1,5 | 1,4 | 1,2 |
| 7 d, 7 W | 0 | 0 | 0,14 | 0,23 | - | 0,22 | 0 | 0,61 | 0,4 | 0,6 | 0,6 | 0,55 | 0,43 |
| 7 d, 21 W | 0 | 0 | 0,19 | 0,23 | 0,39 | 0,47 | 0 | 0,85 | 0,66 | 0,68 | 0,64 | 0,53 | 0,52 |

g.abr. = ganz abgerutscht
* Vergleichsversuch
** zu wenig Verdicker
0 Fliesen abgefallen

Tabelle 2 zeigt eine überraschende Überlegenheit der erfindungsgemäßen Fliesenkleber gegenüber dem Stand der Technik. Bei gleich guter Verarbeitbarkeit sind das Abrutschverhalten und die Wasserfestigkeit wesentlich verbessert. Das eigentliche Überraschungsmoment besteht darin, daß die Verarbeitungs-Eigenschaften nicht gleichzeitig verschlechtert werden. Normalerweise sind die Forderungen nach guter Verarbeitbarkeit und gutem Abrutschverhalten gegenläufig, so daß stets ein Kompromiß geschlossen werden muß, weil man nicht beide gleichzeitig sehr gut einstellen kann. Genau das gelingt aber jetzt aufgrund der Erfindung. Sie gestattet es, gute Verarbeitbarkeit mit gutem Abrutschverhalten zu verbinden. Außerdem werden die Anforderungen hinsichtlich der Wasserfestigkeit optimal erfüllt.

Beispiele 14, 15

Da die Rheologie und teilweise die Wasserfestigkeiten der pastenförmigen Dispersions-Fliesen-Kleber stark von Füllstoffen abhängen, wurde die Dispersion C mit den erfindungsgemäßen Verdickern auch mit einer anderen Füllstoff-Kombination geprüft (Prüfbedingungen wie bei den Beispielen 1-13).

| | Beispiel 14 | Beispiel 15 |
|---|---|---|
| Wasser | 60 | 60 |
| Verdicker Nr. 1 | 10 | - |
| Verdicker Nr. 2 | - | 10 |
| Dispersion C | 100 | 100 |
| Calcit (feinteilig) | 133 | 133 |
| Quarzsand (fein) | 133 | 133 |
| Verarbeitbarkeit | 1 | 1 |
| Wandhaftung und Abrutschverhalten | gut | 1 mm |
| Haftzugfestigkeit [N/mm] | | |
| 7 d | 1,5 | 1,5 |
| 7 d, 21 W | 0,7 | 0,65 |

## Ansprüche

1. Verfahren zum Verlegen von Fliesen, wobei ein wäßriges Klebemittel auf Basis einer Polymerdispersion, die neben der Dispersion als Bindemittel übliche Zusatzstoffe enthält, zwischen Fliesen und Substrat nach Art einer Verklebung gebracht wird, dadurch gekennzeichnet, daß ein Klebemittel eingesetzt wird, das mit einer Verbindung der allgemeinen Formel I verdickt ist :

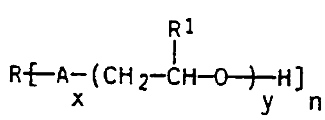

I,

wobei
R = über Sauerstoff gebundener Rest eines 2 bis 6-wertigen Alkohols mit 2 bis 10 C-Atomen,
$R^1$ = Alkyl-, Alkoxymethyl- oder Alkenyloxymethyl-Rest oder eine Mischung dieser Reste, mit jeweils 16 bis 30 C-Atomen im Alkyl-, Alkoxy- bzw. Alkenyloxy-Rest,

A = 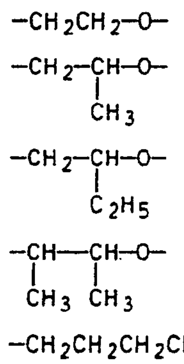 (= EO) allein oder in Mischung mit (= PO) oder

wobei A su mindestens 50 Mol.-% $-CH_2CH_2O-$ bedeutet,
x = 12 bis 500
y = ein Durchschnittswert von 0,3 bis 5,
n = eine ganze Zahl von 2 bis 6,

2. Verfahren nach Anspruch 1, dadurch gekennzeichnet, daß das Klebemittel, bezogen auf die Gesamtmasse, 0,01 bis 5 Gew.-% mindestens einer Verbindung der Formel I enthält.

## Claims

1. A process for laying tiles, in which an aqueous adhesive which is based on a polymer dispersion and, in addition to the dispersion as a binder, contains conventional additives is applied between the tiles and the substrate in the form of an adhesive bond, wherein the adhesive used has been thickened with a compound of the formula I

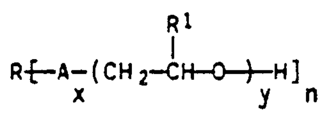 I

where R is a radical of a dihydric to hexahydric alcohol of 2 to 10 carbon atoms, which radical is bonded via oxygen, $R^1$ is alkyl, alkoxymethyl or alkenyloxymethyl or a mixture of these radicals, each having 16 to 30 carbon atoms in the alkyl, alkoxy or alkenyloxy radical, A is $-CH_2CH_2-O-$ (= EO) alone or as a mixture with

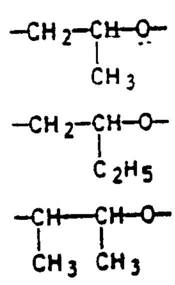 (= PO) or

$-CH_2CH_2CH_2CH_2-O-$, where A is not less than 50 mol % of $-CH_2CH_2O-$, x is from 12 to 500, y has a mean value of from 0. 3 to 5 and n is an integer from 2 to 6.

2. A process as claimed in claim 1, wherein the adhesive contains from 0.01 to 5% by weight, based on the total material, of one or more compounds of the formula I.

## Revendications

1. Procédé de pose de carreaux, conformément auquel on applique entre les carreaux et le support ou substrat, à la manière d'une colle, un adhésif aqueux à base d' une dispersion de polymère qui contient, outre la dispersion, des additifs usuels à titre de liants, caractérisé en ce que l'on utilise un adhésif qui est épaissi

avec un composé de la formule générale I :

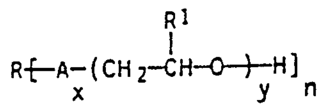

I,

dans laquelle
R représente le reste, lié par un atome d'oxygène, d'un alcool di à hexahydroxylé, comportant de 2 à 10 atomes de carbone,
R1 représente un radical alkyle, alcoxyméthyle ou alcényloxyéthyle, ou un mélange de ces radicaux, dont le groupe alkyle, alcoxyméthyle ou alcényloxy comporte à chaque fois de 16 à 30 atomes de carbone,
A représente

$-CH_2CH_2-O-$ (= EO) seul ou en mélange à

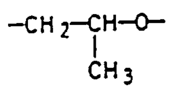

(= PO)

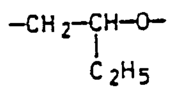

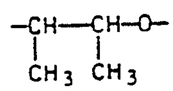

ou

$-CH_2CH_2CH_2CH_2-O-$,

où A désigne au moins 50 moles % de $-CH_2CH_2O-$
x = 12 à 500,
y = 0,3 à 5 en moyenne,
n = un nombre entier de 2 à 6.

2. Procédé suivant la revendication 1, caractérisé en ce que l'adhésif contient, rapportés à la masse globale, de 0,01 à 5% en poids d'au moins un composé de la formule I.